(19) Europäisches Patentamt
European Patent Office
Office européen des brevets

(11) **EP 2 840 542 A2**

(12) **EUROPEAN PATENT APPLICATION**

(43) Date of publication:
25.02.2015 Bulletin 2015/09

(51) Int Cl.:
**G06Q 20/40** (2012.01)

(21) Application number: **14181186.9**

(22) Date of filing: **15.08.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.08.2013 US 201313969680**

(71) Applicant: **Compass Plus (GB) Limited**
**Nottingham, Nottinghamshire NG1 6EE (GB)**

(72) Inventors:
• **Semenov, Alexander**
**Miramar, Florida 33027 (US)**
• **Dragonetsky, Mark**
**Miramar, Florida 33027 (US)**
• **Entrator, Nathan**
**Tel Aviv 69120 (IL)**

(74) Representative: **Garratt, Peter Douglas et al**
**Mathys & Squire LLP**
**The Shard**
**32 London Bridge Street**
**London SE1 9SG (GB)**

(54) **Method and system for detection of fraudulent transactions**

(57) Method/system for automated detection of fraudulent/suspicious credit card transactions. The system collects historical data of customers' transactions over a specified time period. The system identifies customers similar in spending behavior over the specified time period and clusters them into groups. The system detects suspicious transactions by behavior deviations from a normal behavior of a given cluster of customers. The system implements two algorithms for combining the customers into groups (clusters). The first algorithm is based on customers' relationships with the same sellers. The second algorithm is based on similarity of customer spending-based categories of sellers. The execution of clustering algorithms results in creation of two types of experts. The initial data used in the system comprises a teaching set of transactions (filtered and modified historical data over a time period), fraudulent transactions discovered over a given time period and ongoing sets of transactions for detection of fraudulent transactions.

EP 2 840 542 A2

FIG. 1

**Description**

Background of the Invention

Field of the Invention

The present invention relates to security of banking and credit card operations, and more particularly, to automated detection of fraudulent bank/credit card transactions.

Description of the Related Art

Currently, there are a number of conventional methods for fraud detection in banking operations. All of these methods are based on customer spending patterns. If a customer typically spends around two hundred dollars within the US, and then suddenly he spends, for example, several thousand dollars outside the US, this raises a flag and the transaction is blocked and investigated.

Most of the conventional systems use a spending (transactions) pattern of a particular individual customer. This approach can cause some inconvenience, when a customer goes abroad and needs to spend more than usual while paying for hotels, meals or for expensive goods. The card (i.e., a transaction) gets blocked and the customer has to call his bank and to go through a lengthy authentication process in order to be able to unblock the card and actually use it.

This approach can be expensive for the card issuer since it requires a lot of people to monitor the transactions and either block them or to speak to the customers to unblock the cards and allow the transactions. Bank staff is finite, and their capacity to investigate is also finite. The individual customer-based spending pattern approach can be ineffective when a large number of transactions occur at the same time during nationwide sale events, holidays, etc. Many legitimate customer transactions can be blocked, while some fraudulent transactions can go through unnoticed. Furthermore, the conventional bank security systems do not take into account some previous fraudulent transactions when it comes to the individual customers. They only look at the customer spending patterns and the deviations from these patterns.

Accordingly, there is a need in the art for an effective and efficient method for automated detection of fraudulent transactions.

Summary of the Invention

The present invention relates to security of banking operations, and more particularly, to automated detection of fraudulent bank transactions that substantially obviates one or more of the disadvantages of the related art.

In one aspect, there is provided a method for an automated detection of fraudulent (or suspicious) bank transactions. A system collects historical data of customers' transactions over a specified time period. The system identifies customers similar in spending behavior over the specified time period and clusters them into groups. The system detects suspicious transactions by behavior deviations from a normal behavior of a given cluster of customers.

In another aspect, there is provided a system for use in the detection of fraudulent transactions, the system comprising a transaction module configured to: receive credit card transactions; assemble a learning set of transactions with known fraudulent transactions; and provide transactions for analysis; an expert creation module configured for: preparing teaching data based on the transactions in the learning set, and on buyers and sellers involved in said transactions; assigning identifiers to the buyers and the sellers; clustering buyers based on a proximity measure characteristics of buyers; and creating a set of experts based on the teaching data and the clusters of the buyers, wherein the experts are created based on expert creation parameters; and a transaction analysis module configured for: using the experts to analyze the transactions; calculating a strength of warning for fraudulent transactions: and generating the warnings indicating fraudulent transactions.

In another aspect there is provided a computer-implemented method for detection of fraudulent transactions, the method comprising:

assembling a set of credit card transactions;
preparing teaching data based on the transactions, and on buyers and sellers involved in the transactions;
assigning identifiers to the buyers and the sellers;
clustering buyers based on a proximity measure characteristics of buyers;
creating a set of experts based on the teaching data and the clusters of the buyers;
using the experts to analyze the transactions,
calculating a strength of warning for fraudulent transactions, and
generating the warnings indicating fraudulent transactions,
wherein the experts are created based on expert creation parameters.

The transaction may comprise any or any combination of numerical fields:

an occurrence time;
a buyer identifier;
a seller identifier;
a transaction amount;
a seller category identifier in a Merchant Category Code; and
a transaction identifier;

The method may further comprise calculating a strength of expert's warning and a strength of warning by the set of experts.

The method may further comprise calculating an expert effectiveness parameter based on the expert's strength of warning.

The method may further comprise updating a set of experts based on analysis of an individual expert's effectiveness parameter.

The effectiveness parameter may be calculated based on a vector of p-quantiles of a number of fraudulent transactions in the test set of transaction, arranged in order of decreasing strength of warning by the set of experts, is used, with p-quantile is equal to a number np such that with a probability p, the number of a randomly selected fraudulent transaction from the test set, arranged in order of decreasing warning strength, is less than or equal to np, and the experts are updated based on replacing one of the old experts with the new one, and again calculating new effectiveness parameters are calculated for all the sets.

The experts exceeding a threshold of false-positive warnings may be replaced in the set of experts.

The distance between rows of a matrix S representing connections between the buyers may be calculated as

$$d_1(i,j) = \left( \sqrt{\sum_{k=1}^{p_1} S_{ik} \cdot S_{jk}} \right)^{-1}$$

, where $\sum_{k=1}^{p_1} S_{ik} \cdot S_{jk}$ is a number of mutual connections of identifiers $i$ and $j$.

The distance between rows of a matrix S representing connections between the buyers may be calculated as

$$d_2(i,j) = 2 - \log_2 \left( 1 + \frac{\sum_{k=1}^{p_1} S_{ik} \cdot S_{jk}}{\sum_{k=1}^{p_1} \left( S_{ik} + S_{jk} - S_{ik} \cdot S_{jk} \right)} \right)$$

, where

$\sum_{k=1}^{p_1} \left( S_{ik} + S_{jk} - S_{ik} \cdot S_{jk} \right)$ is an aggregate number of connections of $i$-th and $j$-th identifiers.

The clustering of buyers may be based on similarity of spending distributions for each seller category.

The clustering of buyers may be based on a vector of average spending for each category of sellers corresponding to each buyer's identifier.

The distance between the buyers may be calculated as a distance between the corresponding vectors.

A cluster of buyers may comprise a symmetrical matrix of connections between buyers.

Each buyer's identifier may be assigned a vector- line containing zeros and ones, representing a row in a connection matrix.

The experts may be created based on any or any combination of:

a list of all different pairs of identifiers buyer-seller contained in a given set of transactions;
a list of all different identifiers of buyers contained in a found list of pairs buyer-seller with a size indication of every buyer's identifier;
a list of all different identifiers of sellers contained in a found list of pairs buyer-seller with a size indication of every seller's identifier;
a list of all different identifiers of categories of sellers contained in a given subset of transactions with a size indication of every category of a seller;
a list of all different pairs of identifiers buyer-seller's category in a given set of transactions with a size indication; and
a list of all different pairs of identifiers buyer-seller's category in a given set of transactions with a size indication and a total sum of transactions with a given pair.

The expert creation parameters may be any or any combination of:

a number of a version of the set of experts;
a number of algorithm used for clusterization;
a number of experts in the set;
a number of a function used to calculate a strength of warning by the set of experts;
a number of first p-quantiles in a test set of transactions, ordered in decreasing strength of warning;
a permitted increase in p-quantile for including the expert in the set of experts;
a maximum number of times experts can be created without modifying the set of experts;
a maximum number of times experts can be created;
a number of transactions selected as teaching transactions;
a number of transactions in a test set;
limits on maximum and minimum number of transactions selected as teaching transactions;
limits on maximum and minimum number of transactions selected as a test set of transactions;
limits on dates of the transactions selected as teaching transactions;
limits on dates of the transactions selected as test transactions;
a number of quantiles for the sums of the transactions with randomly selected transactions from the teaching set;
a number of randomly selected transactions from the teaching set;
a vector representing limitations on size of the identifiers and pairs of identifiers;
a function of the distance between the buyers, in a range between 1 and 2;
quantiles for filtering buyers based minimum and maximum distances from one buyer to other buyers, in a range $0.01 < minq < 0.15$ and $0.85 < maxq < 0.99$.

According to an exemplary embodiment, the system implements two algorithms for combining the customers into groups (clusters). The first algorithm is based on customers' relationships with the same sellers. The second algorithm is based on similarity of customer spending-based categories of sellers. The execution of clustering algorithms results in generation of two types of experts. The initial data used in the system comprises a teaching set of transactions (filtered and modified historical data over a time period), fraud transactions discovered over a given time period and ongoing sets of transactions for detection of fraud suspicious transactions.

Additional features and advantages of the invention will be set forth in the description that follows, and in part will be apparent from the description, or may be learned by practice of the invention. The advantages of the invention will be realized and attained by the structure particularly pointed out in the written description and claims hereof as well as the appended drawings.

It is to be understood that both the foregoing general description and the following detailed description are exemplary and explanatory and are intended to provide further explanation of the invention as claimed.

Brief Description of the Attached Figures

The accompanying drawings, which are included to provide a further understanding of the invention and are incorporated in and constitute a part of this specification, illustrate embodiments of the invention and together with the description serve to explain the principles of the invention.

In the drawings:

FIG. 1 illustrates a workflow of a system, in accordance with the exemplary embodiment;
FIG. 2 illustrates a distribution of identifiers by sizes from a teaching set of transactions, in accordance with the exemplary embodiment;
FIG. 3 illustrates teaching data used for set of experts, in accordance with the exemplary embodiment;
FIG. 4 illustrates a schematic diagram of an exemplary computer or server that can be used in the invention.

Detailed Description of Embodiments of the Invention

Reference will now be made in detail to the embodiments of the present invention, examples of which are illustrated in the accompanying drawings.

A method, system and computer program product for automated detection of fraudulent bank transactions is provided. The method, in accordance with an exemplary embodiment, provides for detection of fraudulent transactions based on customer clusters and a proximity measure between customers.

According to the exemplary embodiment, the system implements two algorithms for combining the customers into groups (clusters). The first algorithm is based on customers' relationships with the same sellers. The second algorithm is based on similarity of customer spending-based categories of sellers. The execution of clustering algorithms results in two types of experts. The initial data used in the system comprises a teaching set of transactions (filtered and modified historical data over a time period), fraud transactions discovered over a given time period and ongoing sets of transactions for detection of fraud suspicious transactions.

Because of a large teaching set of transactions, the system produces subsets (i.e., clusters) of experts and generates cluster warnings. The teaching sets are used for creation of expert subsets. The system has two working modes: creation of expert subsets and generation of warnings by the expert subsets.

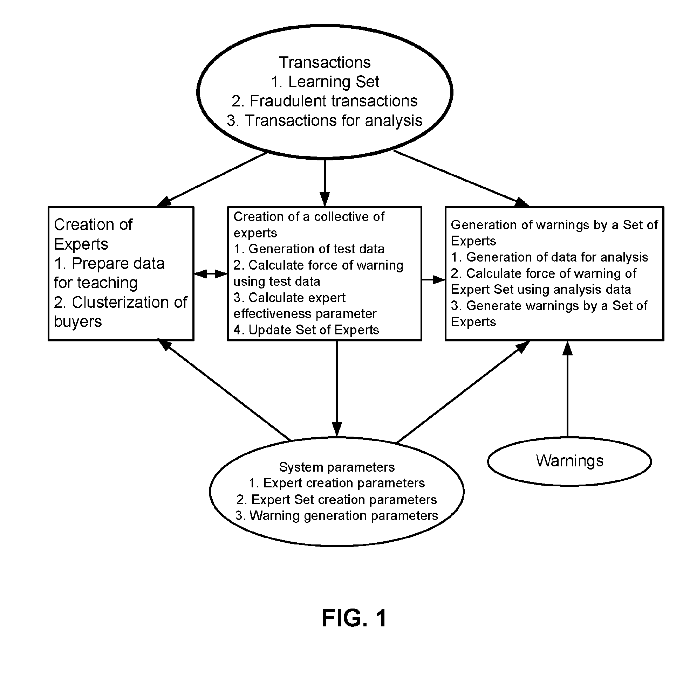

**FIG. 1** illustrates a workflow of a system, in accordance with the exemplary embodiment. According to the exemplary embodiment, the main objects with which the fraud detection system works are transactions **110** and experts. The transactions **110** include a learning set of transactions; fraudulent transactions and transactions for analysis. The system creates a set of experts (see block **120**) based on the transactions **110**. In block **120,** the teaching data is prepared and the buyers are assembled into clusters. Then, in block **130,** a set of experts is created. A test data is generated and the force of expert warning is calculated using the test data. The expert effectiveness parameter is calculated and the set of experts is updated.

As a further option, the to generate the set of experts, a vector of p-quantiles of a number of fraudulent transactions in the test set of transactions, arranged in order of decreasing warning strength (see discussion of warning strength below), is used, with (p=0.1,0.2,...,1).

The idea of p-quantiles is that there is a test set of transactions (e.g., 10000 transactions), and among them, there are known fraudulent transactions (e.g., 100 of them). All the 10000 test transactions are organized in order of decreasing strength of warning by the set of experts. Each transaction from the test set has a number, including the fraudulent ones. Randomly, a fraudulent transaction is selected (i.e., one of the 100), and its number is checked.

p-quantile is equal to a number $np$ such that with a probability $p$, the number of a randomly selected fraudulent transaction from the test set of transactions , arranged in order of decreasing warning strength, is less than or equal to $np$, where the vector of p-quantiles consists of the numbers for different probabilities $p = 0.1., 0.2...1$.

To modify the set of experts, first, a set of N experts is generated, for each expert, their effectiveness parameters are calculated (i.e., the p-quantiles vector).

Then, a new expert is generated, and N new sets of experts are updated based on replacing on the old experts with the new one, and again, new effectiveness parameters are calculated for all the sets.

Among newly formed set of experts, the ones selected are those that have no more than $n2<nl$ increased in the first n1 quantiles (compared to the original set), see also discussion below. If there are no such sets, then there is no need to modify the sets. If such sets exist, then the ones that are chosen are those that have the largest total reduction in the first n1 p-quantiles. Alternatively, those sets of experts are selected that have the highest effectiveness parameters mincpl (there could be multiple sets of experts), and, from those selected, the set is selected that has the lowest effectiveness parameter maxcp2.

In block **140** warnings are generated by the set of experts. First, expert data for analysis is generated. The process calculates a force of warning for the expert set using data analysis. Then, a warning **160** is generated by the set of experts. The system uses the parameters listed in block **150:** expert creation parameters, expert set creation parameters and warning generation parameters.

The transactions are represented in the system in a form of six numeric fields. The transaction fields are:

datetime - a moment of occurrence of the transaction in seconds from a pre-set moment in the past;
idcust - a unique identifier of a customer (buyer/credit card holder);
idret - a unique identifier of a retailer (seller);
amount - sum of the transaction;
sic - unique identifier of a seller category (Merchant Category Code);
idtran - unique identifier of a transaction.

According to the exemplary embodiment, the experts of two types are represented in the system by the structures with seven fields. The expert fields are:

type - type of an expert;
param -expert creating parameters;
tran - teaching data (set of transactions);
idcusts - identifier of buyers (a numeric vector) with known behavior to the expert;
idx - cluster numbers that contain given buyers (a numeric vector);
sicsort - list of identifiers of categories of sellers that are used to create a given expert (for experts of second type);

cp - expert's effectiveness parameters (a numeric vector of length 2); and percentage of fraud transactions identified by the expert and percentage of expert's false warnings during testing (defined during testing of an expert). The expert detects the fraudulent transaction if the strength of the warning exceeds a predefined threshold (one of the parameters of the creation of the expert). Alternatively (and preferably, since no predefined parameters are needed), the p-quantile vector described above can be used.

According to the exemplary embodiment, a set of transaction is defined as a matrix where every line is a transaction. Following characteristics of teaching data are used during the creation of the experts (a subset of a learning set):

- a list of all different pairs of identifiers buyer-seller contained in a given set of transactions:

$$(idcust_k, idret_k), k = 1,..., n;$$

- a list of all different identifiers of buyers contained in a found list of pairs with size indication of every buyer (a number of pairs with a given buyer)

$$(idcust_k, n_k), k = 1,...,p_1;$$

- a list of all different identifiers of sellers contained in a found list of pairs with size indication of every seller (a number of pairs with a given seller)

$$(idret_k, n_k), k = 1,..., p_2;$$

- a list of all different identifiers of categories of sellers contained in a given subset of transactions with the size indication of every category of seller (a number of transactions with a given category of seller)

$$(sic_k, n_k), k=1,..., p_3;$$

- a list of all different pairs of identifiers buyer-seller's category in a given set of transactions with size indication (a number of transactions with a given pair of identifiers) and total sum of transactions with a given pair

$$(idcust_k, sic_k, n_k, sum_k), k =1,..., m.$$

- a list of all different pairs of identifiers buyer-seller's category in a given set of transactions with size indication (a number of transactions with a given pair of identifiers) and total sum of transactions with a given pair

$$(idcust_k, sic_k, n_k, sum_k), k = 1, ..., m.$$

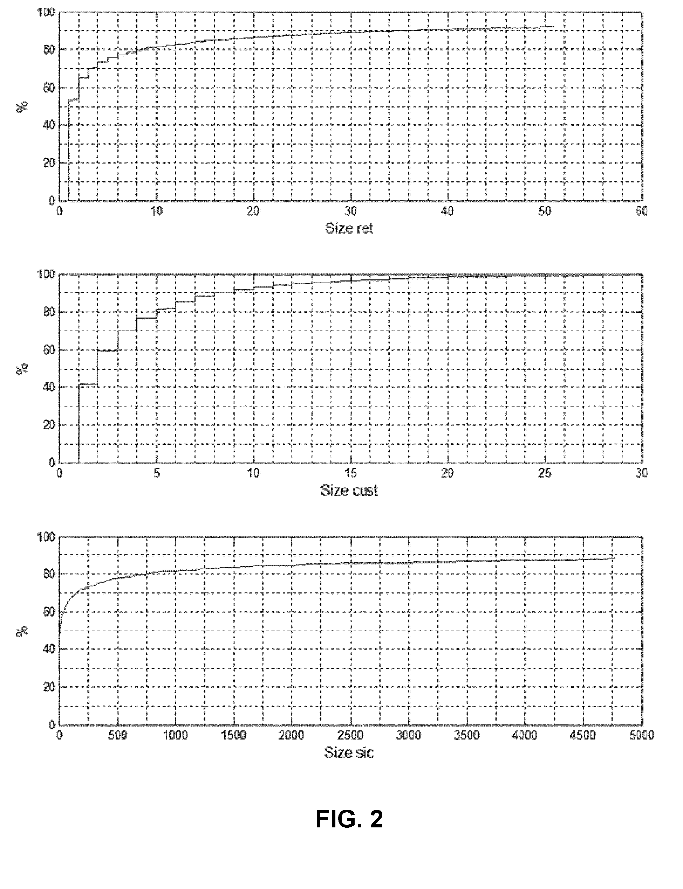

**FIG. 2** illustrates a distribution of buyers, sellers and seller categories by sizes from a teaching set of transactions. Sizes of buyers, sellers and seller categories are used by the system for creation of experts. Sizes of buyers, sellers and seller categories do not exceed a certain pre-set size. To generate the expert, buyers, sellers and seller categories are chosen of a size no smaller than those pre-set for that type of experts. The larger the minimum size, the fewer such buyers, sellers and seller categories there will be, as can be seen in the figures. If the smallest size is taken as 5, then fewer than 20% of the buyers will be left. The "size" of the buyer is a number of sellers that are connected with this buyer through transactions from the teaching set, i.e., the number of buyer-seller pairs with this buyer.

Graphs depicted in **FIG. 2** illustrate that the majority of buyers and sellers have a small size. This allows for an effective filtration of a teaching set of transactions based on minimum sizes of buyers and sellers during the creation of experts. The filtering reduces the number of buyers (since the teaching set can have millions of buyers). For example, if 100,000 buyers are considered, then the matrix of connections between them will be on the order of tens of gigabytes.

According to the exemplary embodiment, a set of experts is an array of structures. In order to make a set of experts more efficient in terms of detection of fraudulent transactions the following parameters are used:

- $mincp_1$ - the smallest percentage of uncovered fraud transactions of all experts within a given set during testing;
  $maxcp_2$ - the largest percentage of false warnings across all experts in a given set during testing.

Alternatively, the vector of p-quantiles can be used as an effectiveness parameter, as described above. With this parameter, the same function can be used both for creation of the expert set and for generation of collective warnings.

According to the exemplary embodiment, creation of experts is performed in two stages: preparation of learning materials and teaching of the experts. Due to a substantial increase in time required for experts' teaching algorithms with the increase of the amounts of teaching data, the teaching of an expert is performed on a relatively small subset of a teaching set of transactions. Thus, each expert has only local knowledge, and a set of experts is needed.

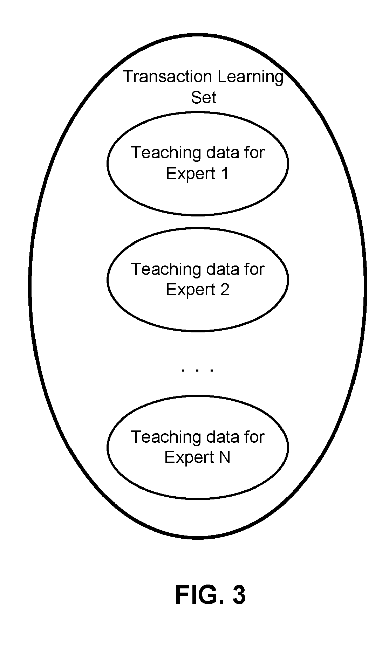

FIG. 3 illustrates teaching data used for a set of experts, in accordance with the exemplary embodiment. According to the exemplary embodiment, the teaching data for an expert is a subset of a learning set of transactions. The data preparation algorithm for creation of an expert includes the following steps:

- A subset of transactions is randomly selected from a learning set and assigned characteristics. The size of a subset is a parameter used for an expert creation. As an option, the transactions can be selected at random based on the sums involved in the teaching set. The selection is done so that the statistical median, mean, and standard deviation of the transaction sums is close to the median, mean, and standard deviation of the entire teaching set. This way, the selected transactions are representative. The transactions are divided in $m+1$ intervals. The boundaries are selected to match the p-quantiles of the transactions sums from the teaching set, $p = 0, 0.5, 0.75,..., 1-0.5^m, 1$. Then, for each interval, the teaching set is filtered based on the sum, those transactions are selected that are within the interval, and, from the filtered set, random transactions are selected in a number that is proportionate to the difference in probabilities p at the boundary points of the interval. The total number of selectee transactions is a parameter for creation of the expert.
- A broad set of transactions is created based on the lists of identifiers of buyers and sellers of a selected subset. The broad set of transactions contains all transactions from the learning set with a set of corresponding identifiers.

The reason for producing the broad set of the transactions is to take into account all transactions of selected buyers and sellers for a future statistical analysis of sums of their transactions. According to the exemplary embodiment, the broad set of transactions is filtered according to the size of buyers and sellers (minimal size of buyers and sellers is established and is used as an expert creating parameter).

Teaching of the experts includes assembling the buyers (cardholders) into the groups (i.e., clusters), where the buyers exhibit similar behavior. The buyers in the system are represented by a set of unique identifiers. The essence of teaching algorithms is in generating a numeric vector corresponding to each of the identifiers. The distance between the vectors is determined (either using the equations below, or using classical distance measures, such as Squared Euclidean distance, City block metric, etc.) and the vectors are assembled into clusters using one of the conventional methods (e.g., hierarchical clustering or method of k-means uses a two-phase iterative algorithm to minimize the sum of point-to-centroid distances, summed over all k clusters).

According to the exemplary embodiment, a system uses two algorithms for teaching experts (i.e., two types of experts). The type of expert is a method of clusterization of buyers (by the buyers visiting the same sellers and by distribution of buyer purchases by seller categories. The buyers are clustered based on their association with the identical sellers. First, characteristics of teaching data of an expert are being calculated and, then, every buyer's identifier is assigned a vector connecting it with other buyers' identifiers. Two different buyer identifiers are considered connected if the list of pairs of identifiers buyer-seller contains two pairs with identifiers of given buyers and an identical identifier of a seller, as shown below.

A list of pairs of identifiers:

$(idcust_l, idret_l)$

......

$(idcust_k, idret_k)$

......

$(idcust_m, idret_m)$

........

$(idcust_u, idret_n)$

If $idret_k = idret_m$, then $idcust_k$ is associated with $idcust_m$.

This is the condition for connection between the buyer identifiers. According to the exemplary embodiment, the multitude of all connections of buyers' identifiers is described by a symmetrical matrix $S = \left\{ S_{ij} \right\}_{i,j=1}^{p_1}$ , consisting of zeros and ones of a size of $p_1 \times p_1$, where $p_1$ - a number of different buyers' identifiers in the expert's teaching data set.

In this matrix, in place of *(i,j)* is 1, if *i*-th и *j*-th identifiers are connected (associated). Otherwise, in place of *(i,j)* is 0. Therefore, every buyer's identifier is assigned a vector-line containing zeros and ones (a line of connection matrix). Note that different identifiers can correspond to the identical lines.

The calculation of a distance between i-th and j-th buyers' identifiers (i.e., between the lines of the connection matrix - simply "between buyers") is implemented in the system in two ways (the distance function serves as an expert creating parameter):

In one embodiment, the distance is calculated as:

$$ d_1(i,j) = \left( \sqrt{\sum_{k=1}^{p_1} S_{ik} \cdot S_{jk}} \right)^{-1} \quad , \text{ where } \sum_{k=1}^{p_1} S_{ik} \cdot S_{jk} \quad - \text{ is a number of mutual} $$

connections of identifiers *i* and *j*. Also, if *i = j,* then the distance is 0.

If the number of mutual connections equals 0, then the distance equals 3. The hierarchical clustering algorithm sequentially connects pairs of buyers, and then pairs of pairs of buyers, and so on. The buyers or pairs that are closest to each other are first connected. Unconnected buyers should not form a pair. The distance needs to be large enough on the one hand, so that two groups can still be connected (even if these groups have buyers unconnected with each other), on the other hand, it cannot be too large. Distance between buyers affects the distance between groups, and, therefore, it can't be too large. Empirically, a distance of around 3, , gives good clusterization.

Note that the given formula measures not the distance (the triangle inequality is not implemented, such as two buyers that are close to the third may be far from each another), but some measure of relative closeness or proximity. In mathematics, the triangle inequality states that for any triangle, the sum of the lengths of any two sides must be greater than the length of the remaining side

In another embodiment, the distance, for which the triangle inequality holds true, is calculated as:

$$ d_2(i,j) = 2 - \log_2 \left( 1 + \frac{\sum_{k=1}^{p_1} S_{ik} \cdot S_{jk}}{\sum_{k=1}^{p_1} \left( S_{ik} + S_{jk} - S_{ik} \cdot S_{jk} \right)} \right) \quad , $$

where $\sum_{k=1}^{p_1} \left( S_{ik} + S_{jk} - S_{ik} \cdot S_{jk} \right) \quad -$ is an aggregate number of connections of *i*-th and *i*-th identifiers. Also, if *i = j,* t*hen the distance equals to 0.

The exemplary embodiment can be illustrated by a following example. Assuming that the two buyers' identifiers have the following connection vectors: (1,1,0,1,0,0,1,1) and (0,1,1,1,0,0,0,1). For the given identifiers, a number of mutual connections equals 3, and the total number of the pair's connections equals to 6.

Then

$$ d_1 = \frac{1}{\sqrt{3}} \approx 0.577 \text{ and } d_2 = 2 - \log_2 \frac{3}{2} \approx 1.415 $$

Then, a representative subset of buyers' identifiers that are located within a certain distance from each other (minimal distance is a parameter for creating an expert) is selected. As an option, the representative set of buyers can be selected based on the buyers being in a certain average distance range (plus/minus) relative to other buyers from the teaching set for this expert. For example, 10% of the buyers with the smallest distance and 10% of the buyers with the largest distance are filtered out. A remaining subset of buyers' identifiers is clustered by a standard algorithm of hierarchical clustering (function *linkage* of the *MatLab* package). Parameters of a given function serve as the parameters for creation of an expert.

Note that the proposed method for clustering of identifiers can be used in a broader more general situation. If a set of objects (described by the set of identifiers) and a subset of the identifiers are selected, then the list of different values of a given subset of the identifiers for the given set of objects can be clustered using the matrix of connections between the objects.

For example, clustering the values of pairs buyer-seller category can be used as an alternative second type of experts. According to yet another exemplary embodiment, clustering of buyers can be based on similarity of spending distributions for each category of sellers.

The second algorithm is based on a having a vector of average spending for each category of sellers corresponding to each buyer's identifier. Let $idcust$ - buyer's identifier, $sic_k$, $k = 1,..., p$, where $p$ - is a selected number of the largest categories of sellers (expert creating parameter) and

$$(idcust, sic_k, n_k, sum_k), k = 1, ..., p$$

a set of pairs of identifiers buyer-seller's category with a given buyer's identifier and selected by size the identifiers of seller categories. Then, the identifier $idcust$ has a corresponding vector-line:

$$vs(idcust) = \left( f\left( \frac{sum_1}{n_1} \right), ..., f\left( \frac{sum_p}{n_p} \right) \right),$$

where $f$ - smoothing increasing function (expert creating parameter), for example, $f(x) = \lg(1 + \lg(1 + x))$. The smoothing function is necessary because of a large difference in average sums of transactions in different pairs of identifiers of buyer-seller's category.

Likewise, to every set of buyers' identifiers there is a corresponding smoothing vector of average spending over different sellers' categories. Furthermore, vector-lines are clustered by a standard k-means algorithm (function *kmeans* of the *MatLab* package). The parameters of this function are the expert creating parameters.

According to the exemplary embodiment, a strength of an expert warning for a transaction is calculated. The strength of warning is expressed by a positive number and is determined as following. An expert is chosen and some transaction is analyzed. For an expert of the first type, a cluster of buyers from a chosen expert is found. The cluster must be the closest to the buyer in the transaction being analyzed. The closest is the cluster, where the average distance from its members to the buyer in the analyzed transaction is minimal.

Then, a normalized deviation of the sum of the analyzed transaction from an average value of sums of buyers' transactions of a cluster is calculated. In this case, normalization means division by a standard deviation of sums of transaction from an average value of the sums of buyers' transactions from the cluster. Statistics of sums of transactions are calculated based on the expert's teaching data.

For an expert of the second type, a buyers' cluster from a chosen expert is found. The cluster must be the closest to the buyer in the analyzed transaction. The closest is the cluster, where there is a minimal Euclidian distance between smoothed vector of an average spending of a buyer from the analyzed transaction over sellers' categories and the smoothed vector of average spending of all buyers from a cluster over the sellers' categories.

Then, the standard deviation of the sum of the analyzed transaction from an average value of sums of buyers' transactions from a cluster of the seller category matching with the seller category from the analyzed transaction is calculated. According to the exemplary embodiment, a group (or a set) of experts is created. Since a single expert has the "knowledge" about the behavior of only a small group of buyers from the teaching set, it is necessary to create a set of experts. In the process of creation of an expert, a subset of transactions is selected randomly from the teaching set of transactions.

Because the process of an expert creation depends on many other parameters, it is implemented as a step-by-step creation of an individual expert and calculation (for each created expert) of an index of expert effectiveness based on the test data and a decision making of including the expert in an expert set. A newly created expert can replace the existing expert in the set, if the effectiveness of the group as a whole increases due to this replacement.

According to the exemplary embodiment, the test data is a plurality of the transactions. A set of the transactions consists of fraudulent transactions and of randomly selected set of transaction from the teaching set. The transactions can be selected randomly, see discussion above regarding p-quantiles (for the sums of the transactions from the teaching set). Effectiveness of an expert is calculated as discussed above with reference to p-quantiles, where in essence p is a measure of sensitivity (percentage of detected fraudulent transactions). Alternatively, effectiveness can be calculated as follows:

A minimal strength threshold of an expert warning is set as a parameter for creation of the expert set. Then, it is assumed that the expert has detected a fraudulent transaction, if the expert's strength of warning for that transaction has exceeded the threshold. The following parameters of expert's effectiveness are calculated based on the test data: - Percentage of fraudulent transactions detected by the expert (first optional parameter, $cp_1$);

- Percentage of false positives - i.e., a number of transactions for which the expert's warning strength had exceeded the threshold, while the transactions were legitimate (second optional parameter, $cp_2$).

According to the exemplary embodiment, an algorithm for update of the experts' set is implemented. A number N of the experts within a given expert set is used as a parameter for the expert set. When experts are created, the parameters for their creation are randomly selected from the sets of values defined for each parameter. The N experts are created. Preferably, , a set of N experts is created (N is a parameter of the detection system), and its effectiveness is calculated based on the vector of p-quantiles. Then, one new expert is created, and N new sets of experts are generated by replacing one of the old experts, and the effectiveness parameters are re-calculated.

Among newly formed set of experts, the ones selected are those that have no more than n2<nl increased in the first n1 quantiles (compared to the original set). The smaller the quantiles, the more effective the set of experts. The requirement for n1 quantiles to decrease can be too strong, and, therefore, n2 of them need to increase, rather than nl. For example, nl=6 и n2=1. The the set of experts is modified if there is another set whose first 6 quantiles or 5 of the first 6 decreased, in other words,no more than one quantile increased. If there are no such sets, then there is no need to modify the sets. If such sets exist, then the ones that are chosen are those that have the largest total reduction in the first n1 p-quantiles.

An alternative method of creating experts is where the following properties are assigned to the experts' set: first - a parameter of minimum effectiveness $mincp_1$, and second - a parameter of maximum effectiveness $maxcp_1$. The worst performing expert in the set is the one that has $cp_1 = mincp_1$ and the highest in the $setcp_2$. A new expert is then created. If the following is true for the new expert: $cp_1 > mincp_1$ and $cp_2 \leq maxcp_2$, or $cp_1 = mincp_1$ and $cp_2 < maxcp_2$, then the new expert replaces the worst performing expert in the set. Otherwise, the expert set remains unchanged.

The process of renewing of the experts' set stops when the set is not renewed over a certain number of creations of the new experts. A maximum number of creations of new experts without update of the experts' set is used as a parameter of experts' set creation.

According to the exemplary embodiment, generation of sets of warnings in the system is implemented in two modes: in "one at a time" mode of transactional analysis and in a package mode of transactional analyzes (i.e., determination of a warning generation parameter).

The packaged mode of transactional analyzes includes preparation of the data for analysis. A package of transactions is formed for analyses. A number of transactions should preferably be greater than about 10000 (a warning generation parameter). An algorithm for warning generations by the set of experts is implemented as follows. The strength of warning is calculated for every expert from the expert set and for every transaction. For each expert, the transactions are ordered in the descending order of the strength of its warnings. Each expert assigns a number to each of the transactions.

Subsequently, a minimal number is selected within the experts' set. The range of numbers within the set (i.e., a difference between the maximum and the minimum numbers) is divided by minimal number. Alternatively, the increasing function of the numbers' range can be used. For example, a function $f(x) = x^a$, $0 < \alpha < 1$) can be used as a parameter for warning generation. The resulting numbers are ordered in decreasing order. Thus, each transaction from the package is assigned a number (the strength of the warning) by the expert set. The initial transaction package is ordered according to the assigned numbers. Then, for the first r% (warning generation parameter) of the transactions from the ordered package the fraud warnings are generated. the parameter r is smaller than 1%, so that the number of warnings generated is no greater than what the bank or card issuer can process

According to another exemplary embodiment, the "one at a time" mode of transactional analysis is implemented. In this regime, there is no need to form a set of transactions for analysis by the set of experts, only a single transaction needs to be analyzed, and either the set of experts will generate a warning, or not. For every given transaction and for every expert from the set of experts, a strength of warning is calculated. If a strength of warning of $K$ number of experts from the set of experts exceeds the threshold P (warning generating parameter), a fraud warning is generated for this transaction.

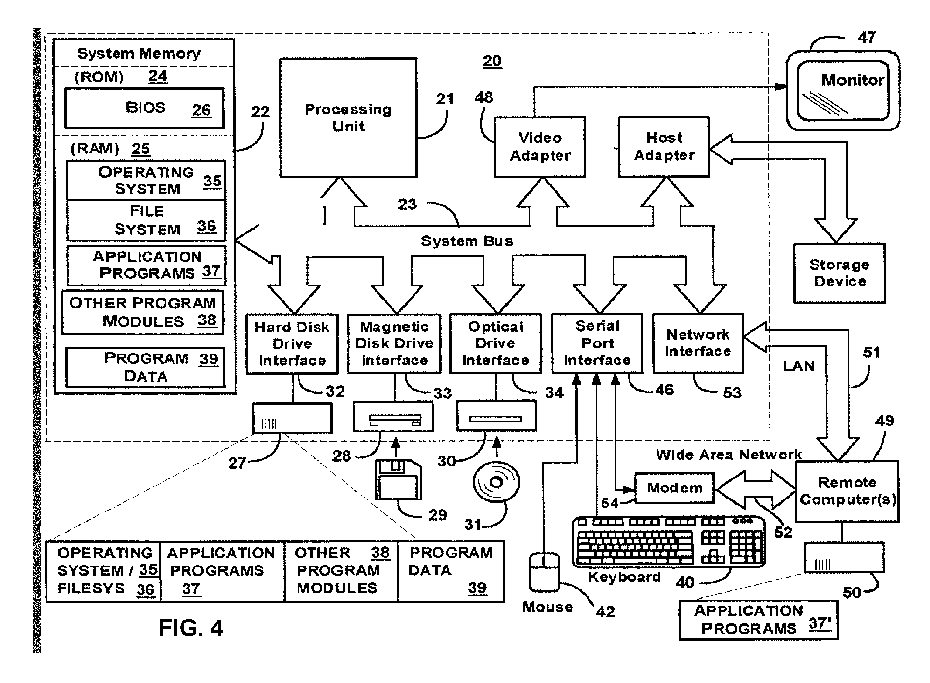

With reference to **FIG. 4,** an exemplary system for implementing the invention includes a general purpose computing device in the form of a personal computer **20** or server **150** or the like, including a processing unit **21,** a system memory **22,** and a system bus **23** that couples various system components including the system memory to the processing unit **21**. The system bus **23** may be any of several types of bus structures including a memory bus or memory controller, a peripheral bus, and a local bus using any of a variety of bus architectures. The system memory includes read-only memory (ROM) **24** and random access memory (RAM) **25.**

A basic input/output system **26** (BIOS), containing the basic routines that help to transfer information between elements within the computer **20,** such as during start-up, is stored in ROM **24**. The personal computer **20** may further include a hard disk drive **440** for reading from and writing to a hard disk, not shown, a magnetic disk drive **28** for reading from or writing to a removable magnetic disk **29,** and an optical disk drive **30** for reading from or writing to a removable optical disk **31** such as a CD-ROM, DVD-ROM or other optical media.

The hard disk drive, magnetic disk drive **28,** and optical disk drive **30** are connected to the system bus **23** by a hard disk drive interface **32,** a magnetic disk drive interface **33,** and an optical drive interface **34,** respectively. The drives and their associated computer- readable media provide non-volatile storage of computer readable instructions, data structures, program modules and other data for the personal computer **20.**

Although the exemplary environment described herein employs a hard disk, a removable magnetic disk **29** and a removable optical disk **31,** it should be appreciated by those skilled in the art that other types of computer readable media that can store data that is accessible by a computer, such as magnetic cassettes, flash memory cards, digital video disks, Bernoulli cartridges, random access memories (RAMs), read-only memories (ROMs) and the like may also be used in the exemplary operating environment.

A number of program modules may be stored on the hard disk, magnetic disk **29,** optical disk **31,** ROM **24** or RAM **25,** including an operating system **35** (such as Windows Server™ 2008 or later). The computer **20** includes a file system **36** associated with or included within the operating system **35,** such as the WINDOWS NT™ File System (NTFS), one or more application programs 37, other program modules **38** and program data **39**. A user may enter commands and information into the personal computer **20** through input devices such as a keyboard **40** and pointing device **42.**

Other input devices (not shown) may include a microphone, joystick, game pad, satellite dish, scanner or the like. These and other input devices are often connected to the processing unit **21** through a serial port interface **46** that is coupled to the system bus, but may be connected by other interfaces, such as a parallel port, game port or universal serial bus (USB). A monitor **47** or other type of display device is also connected to the system bus **23** via an interface, such as a video adapter **48.**

In addition to the monitor **47,** personal computers typically include other peripheral output devices (not shown), such as speakers and printers. A data storage device, such as a hard disk drive, a magnetic tape, or other type of storage device is also connected to the system bus **23** via an interface, such as a host adapter via a connection interface, such as Integrated Drive Electronics (IDE), Advanced Technology Attachment (ATA), Ultra ATA, Small Computer System Interface (SCSI), SATA, Serial SCSI and the like.

The computer **20** may operate in a networked environment using logical connections to one or more remote computers **49**. The remote computer (or computers) **49** may be another personal computer, a server, a router, a network PC, a peer device or other common network node, and typically includes many or all of the elements described above relative to the computer **20.**

The computer **20** may further include a memory storage device **50**. The logical connections include a local area network (LAN) **51** and a wide area network (WAN) **52.** Such networking environments are commonplace in offices, enterprise-wide computer networks, Intranets and the Internet.

When used in a LAN networking environment, the personal computer **20** is connected to the local area network **51** through a network interface or adapter **53**. When used in a WAN networking environment, the personal computer 20 typically includes a modem **54** or other means for establishing communications over the wide area network **52,** such as the Internet. The modem **54,** which may be internal or external, is connected to the system bus **23** via the serial port interface **46.**

In a networked environment, program modules depicted relative to the personal computer **20,** or portions thereof, may be stored in the remote memory storage device. It will be appreciated that the network connections shown are exemplary and other means of establishing a communications link between the computers may be used.

Having thus described the different embodiments of a system and method, it should be apparent to those skilled in the art that certain advantages of the described method and apparatus have been achieved. In particular, it should be appreciated by those skilled in the art that the proposed method provides for an efficient detection of fraudulent transactions.

It should also be appreciated that various modifications, adaptations, and alternative embodiments thereof may be made within the scope and spirit of the present invention. The invention is further defined by the following claims.

**Claims**

1. A system for use in the detection of fraudulent transactions, the system comprising:

   a transaction module configured to:

      receive credit card transactions;
      assemble a learning set of transactions with known fraudulent transactions; and
      provide transactions for analysis;

   an expert creation module configured for:

      preparing teaching data based on the transactions in the learning set, and on buyers and sellers involved in said transactions;
      assigning identifiers to the buyers and the sellers;
      clustering buyers based on a proximity measure characteristics of buyers; and
      creating a set of experts based on the teaching data and the clusters of the buyers, wherein the experts are created based on expert creation parameters; and

   a transaction analysis module configured for:

      using the experts to analyze the transactions;
      calculating a strength of warning for fraudulent transactions; and
      generating the warnings indicating fraudulent transactions.

2. The system of claim 1, wherein the transaction comprises any or any combination of numerical fields:

   an occurrence time;
   a buyer identifier;
   a seller identifier;
   a transaction amount;
   a seller category identifier in a Merchant Category Code; and
   a transaction identifier.

3. The system of any preceding claim, the expert creation module further configured for calculating a strength of expert's warning and a strength of warning by the set of experts.

4. The system of any preceding claim, the expert creation module further configured for calculating an expert effectiveness parameter based on the expert's strength of warning.

5. The system of any preceding claim, the expert creation module further configured for updating a set of experts based on analysis of an individual expert's effectiveness parameter, preferably wherein the effectiveness parameter is calculated based on a vector of p-quantiles of a number of fraudulent transactions in the test set of transaction, arranged in order of decreasing strength of warning by the set of experts, is used, with p-quantile is equal to a number $np$ such that with a probability p, the number of a randomly selected fraudulent transaction from the test set, arranged in order of decreasing warning strength, is less than or equal to $np$, and the experts are updated based on replacing one of the old experts with the new one, and again calculating new effectiveness parameters are calculated for all the sets.

6. The system of any preceding claim, wherein the experts exceeding a threshold of false-positive warnings are replaced in the set of experts.

7. The system of any preceding claim, wherein the distance between rows of a matrix S representing connections between the buyers is calculated as

$$d_1(i,j) = \left( \sqrt{\sum_{k=1}^{p_1} S_{ik} \cdot S_{jk}} \right)^{-1}$$ , where $\sum_{k=1}^{p_1} S_{ik} \cdot S_{jk}$ is a number of mutual connections of identifiers $i$ and $j$.

8. The system of any preceding claim, wherein the distance between rows of a matrix S representing connections between the buyers is calculated as

$$d_2(i,j) = 2 - \log_2 \left( 1 + \frac{\sum_{k=1}^{p_1} S_{ik} \cdot S_{jk}}{\sum_{k=1}^{p_1} \left( S_{ik} + S_{jk} - S_{ik} \cdot S_{jk} \right)} \right)$$ ,

where $\sum_{k=1}^{p_1} \left( S_{ik} + S_{jk} - S_{ik} \cdot S_{jk} \right)$ is an aggregate number of connections of $i$-th and j-th identifiers.

9. The system of any preceding claim, wherein the clustering of buyers is based on similarity of spending distributions for each seller category and/or on a vector of average spending for each category of sellers corresponding to each buyer's identifier, preferably wherein a cluster of buyers comprises a symmetrical matrix of connections between buyers.

10. The system of any preceding claim, wherein the distance between the buyers is calculated as a distance between the corresponding vectors.

11. The system of any preceding claim, wherein each buyer's identifier is assigned a vector- line containing zeros and ones, representing a row in a connection matrix.

12. The system of any preceding claim, wherein the experts are created based on any of or any combination of:

   a list of all different pairs of identifiers buyer-seller contained in a given set of transactions;
   a list of all different identifiers of buyers contained in a found list of pairs buyer-seller with a size indication of every buyer's identifier;
   a list of all different identifiers of sellers contained in a found list of pairs buyer-seller with a size indication of every seller's identifier;
   a list of all different identifiers of categories of sellers contained in a given subset of transactions with a size indication of every category of a seller;
   a list of all different pairs of identifiers buyer-seller's category in a given set of transactions with a size indication; and
   a list of all different pairs of identifiers buyer-seller's category in a given set of transactions with a size indication and a total sum of transactions with a given pair.

13. The system of any preceding claim, wherein the expert creation parameters are any of or any combination of:

   a number of a version of the set of experts;
   a number of algorithm used for clusterization;
   a number of experts in the set;
   a number of a function used to calculate a strength of warning by the set of experts;
   a number of first p-quantiles in a test set of transactions, ordered in decreasing strength of warning;
   a permitted increase in p-quantile for including the expert in the set of experts;
   a maximum number of times experts can be created without modifying the set of experts;

a maximum number of times experts can be created;

a number of transactions selected as teaching transactions;

a number of transactions in a test set;

limits on maximum and minimum number of transactions selected as teaching transactions;

limits on maximum and minimum number of transactions selected as a test set of transactions;

limits on dates of the transactions selected as teaching transactions;

limits on dates of the transactions selected as test transactions;

a number of quantiles for the sums of the transactions with randomly selected transactions from the teaching set;

a number of randomly selected transactions from the teaching set;

a vector representing limitations on size of the identifiers and pairs of identifiers;

a function of the distance between the buyers, in a range between 1 and 2;

quantiles for filtering buyers based minimum and maximum distances from one buyer to other buyers, in a range $0.01 < minq < 0.15$ and $0.85 < maxq < 0.99$.

**14.** Apparatus for detection of fraudulent transactions, comprising:

a processor;

a memory; and

a computer program logic stored in the memory an executed on the processor, the computer program logic executing the steps of:

assembling a set of credit card transactions;

preparing teaching data based on the transactions, and on buyers and sellers involved in the transactions;

assigning identifiers to the buyers and the sellers;

clustering buyers based on a proximity measure characteristics of buyers;

creating a set of experts based on the teaching data and the clusters of the buyers;

using the experts to analyze the transactions,

calculating a strength of warning for fraudulent transactions, and

generating the warnings indicating fraudulent transactions,

wherein the experts are created based on expert creation parameters.

**15.** A computer program product containing instructions for computer implementation of method for detection of fraudulent transactions, the method comprising:

assembling a set of credit card transactions;

preparing teaching data based on the transactions, and on buyers and sellers involved in the transactions;

assigning identifiers to the buyers and the sellers;

clustering buyers based on a proximity measure characteristics of buyers;

creating a set of experts based on the teaching data and the clusters of the buyers;

using the experts to analyze the transactions,

calculating a strength of warning for fraudulent transactions, and

generating the warnings indicating fraudulent transactions,

wherein the experts are created based on expert creation parameters.

**FIG. 1**

# FIG. 2

Transaction Learning
Set

Teaching data for
Expert 1

Teaching data for
Expert 2

. . .

Teaching data for
Expert N

**FIG. 3**

FIG. 4

EP 2 840 542 A2